# EUROPEAN PATENT SPECIFICATION

(11) **EP 3 712 548 B1**
(45) Date of publication and mention of the grant of the patent: **28.02.2024**
(21) Application number: 19214519.1
(22) Date of filing: 09.12.2019
(51) Int. Cl.: F28D 9/00, F28D 20/02

(54) **HEAT EXCHANGER TEMPERATURE CHANGE RATE CONTROL**
TEMPERATURÄNDERUNGSRATENREGELUNG EINES WÄRMETAUSCHERS
RÉGULATION DE TAUX DE CHANGEMENT DE TEMPÉRATURE D'ÉCHANGEUR DE CHALEUR

(30) Priority: 21.03.2019 US 201916360620
(43) Date of publication of application: 23.09.2020
(73) Proprietor: Hamilton Sundstrand Corporation, Charlotte, NC 28217-4578 (US)
(72) Inventor: ZAGER, Michael, Windsor, CT Connecticut 06095 (US); STREETER, James, Torrington, CT Connecticut 06790 (US)
(74) Representative: Dehns

(56) References cited:
- US-A1- 2007 284 095
- US-A1- 2009 211 732
- US-A1- 2011 297 346
- US-A1- 2013 105 126

## Description

### BACKGROUND

Modern aircraft engines and associated systems operate at increasingly higher temperatures that place greater demands on several pneumatic components, including heat exchangers. Heat exchangers that operate at elevated temperatures often have short service lives and/or require increased maintenance as a result of high cyclic thermal stress. The stress is caused by multiple system and component factors including rapid flow and/or temperature transients, geometric discontinuities, stiffness discontinuities, mass discontinuities, and materials of construction. For example, inlet and exit manifolds are typically pressure vessels that are welded or bolted to a heat exchanger core or matrix. Pressure requirements dictate the thickness of these manifolds, sometimes resulting in a relatively thick header attached to a thinner core matrix. This mismatch in thickness and mass, while acceptable for pressure loads, conflicts with the goal of avoiding discontinuities to limit thermal stress. Because much of the fatigue damage occurs during start-up and shut-down transients, it would be beneficial to slow the magnitude of these thermal transients.

In particular, hot air entering a plate-fin heat exchanger core typically encounters closure bars of the cold circuit that it must flow around to enter the hot circuit fin passages. Because these cold closure bars are exposed to high velocity air on three sides, the cold closure bars heat up rapidly from an initial temperature, and accordingly, can tend to expand rapidly. The stiffer surrounding structure takes longer to heat up and opposes the thermal expansion of the cold closure bars, thereby creating high material stress. Although the combined structure of the heat exchanger core eventually reaches steady state temperatures, the latent damage that occurs during the initial few seconds of the heat-up transient is cumulative, and can limits the fatigue life of the heat exchanger core. Cracking of the cold closure bars and adjacent parting sheets can impact the service life of the heat exchanger core, and/or require more frequent inspection, testing, and/or repair during the service life. The cold closure bars that are near the hot circuit inlet are particularly vulnerable to these effects.

Methods of controlling the rate of flow introduction to the heat exchanger core during the start-up transient by using flow-modulating valves and associated control systems are known in the art. The additional components and control systems associated with those methods can be useful in some applications. However, it can be beneficial to have a means of controlling the rate of the temperature increase of the cold closure bars that is integral to those cold closure bars, thereby not requiring components and control systems that are external to the heat exchanger core. US 2013/0105126 A1 describes a thermal energy exchanger for a heating, ventilating and air conditioning system.

### SUMMARY

The invention is a closure bar adapted for use in a heat exchanger core, wherein the invention is defined in claim 1 and includes a center void region configured to be partially filled with a phase-changing material and sealed, thereby containing the phase-changing material. The center void region has an elliptical, oval, oblong or polygonal cross-section.

A method of producing said closure bar adapted for use in a heat exchanger core is defined in claim 11.

A inventive method of operating a heat exchanger core to reduce a rate of change of temperature in at least one portion thereof is defined in claim 14.

### BRIEF DESCRIPTION OF THE DRAWINGS

FIG. 1 is a perspective view of a plate-fin heat exchanger core with hollow closure bars.
FIG. 2A is an end view of the plate-fin heat exchanger core of FIG. 1 showing the hot fins.
FIG. 2B is a side view of the plate-fin heat exchanger core of FIG. 1 showing the cold fins.
FIG. 3A is a perspective view of a temperature rate-control closure bar shown in FIG. 2B.
FIG. 3B is a cross-sectional side view of the temperature rate-control closure bar shown in FIG. 3A.
FIG. 3C is a cross-sectional end view of the temperature rate-control closure bar shown in FIG. 3A.
FIG. 4A is a graph of temperature versus time for a closure bar of the prior art.
FIG. 4B is a graph of temperature versus time for the temperature rate-control closure bar shown in FIGS. 3A - 3C.

### DETAILED DESCRIPTION

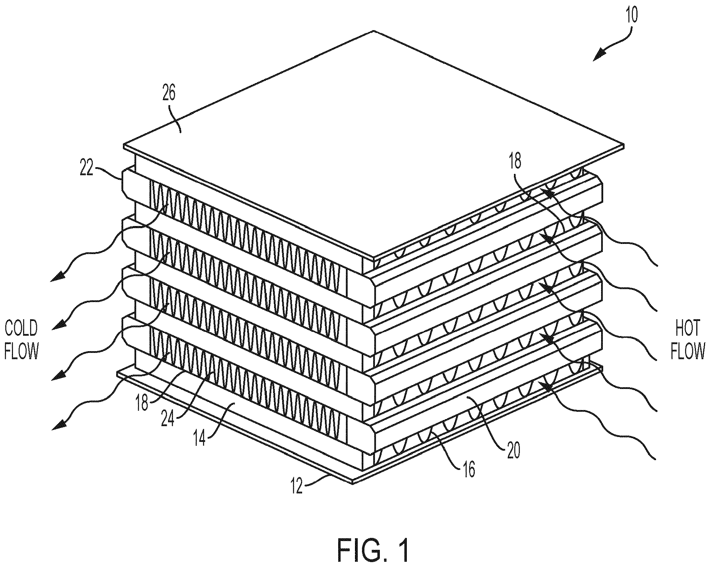

FIG. 1 is a perspective view of a plate-fin heat exchanger core with rate-control closure bars. Shown in FIG. 1 are heat exchanger core 10, bottom end sheet 12, hot closure bars 14, hot fins 16, parting sheets 18, cold inlet closure bars 20, cold outlet closure bars 22, cold fins 24, and top end sheet 26. Heat exchanger core 10, together with inlet and outlet manifolds (not shown) on each of the hot flow and cold flow circuits, can function as a plate-fin heat exchanger for providing a compact, low-weight, and highly-effective means of exchanging heat from a hot fluid to a cold fluid. Because heat exchanger core 10 transfers heat from one fluid to another while maintaining a fluid separation between the two, heat will generally flow from the hot fluid to the cold fluid across the various components in heat exchanger core 10, described hereafter. Therefore, as used in this disclosure, "hot" will be used to describe the first fluid circuit and "cold" will be used to describe the second fluid circuit. The terms "hot" and "cold" are relative one to the other. As used in different embodiments, heat exchanger core 10 can encounter temperatures ranging from near absolute zero (for example, in cryogenic distillation) to 1,300 deg. F (704 deg. C) or more (for example, in gas turbine engine systems and related components). Moreover, "hot" and "cold" are used in this disclosure as descriptive terms to refer to the various components that are associated with the respective first and second fluid circuits in the heat exchanger core, without implying that particular temperatures or a temperature relationship exists for those components during the manufacturing process of heat exchanger core 10.

Alternating hot and cold layers are sandwiched between bottom end sheet 12 and top end sheet 26. Hot fins 16 channel hot flow, with boundaries defined by hot closure bars 14 on either side of each hot layer, and parting sheets 18 on the top and bottom of each layer (with the exception of the bottom layer which is bounded on the bottom by bottom end sheet 12, and the top layer which is bounded on the top by top end sheet 26). Similarly, cold fins 24 channel cold flow, with boundaries defined by cold inlet closure bars 20 and cold outlet closure bars 22 on either side of each cold layer, and parting sheets 18 on the top and bottom of each layer. It is to be appreciated that cold inlet closure bars 20 are so-named because they are in the vicinity of the hot flow inlet to heat exchanger core 10. Similarly, cold outlet closure bars 22 are so-named because they are in the vicinity of the hot flow outlet from heat exchanger core 10.

In the illustrated embodiment, hot fins 16 and cold fins 24 are corrugated. In other embodiments, hot fins 16 and/or cold fins 24 can have any configuration, with non-limiting examples being rectangular, triangular, perforated, serrated, ruffled, and herringbone. In the illustrated exemplary embodiment, five hot layers and four cold layers are used. In other embodiments, there can be practically any number of hot layers and cold layers, and the number of hot layers can be different from the number of cold layers. For example, in a particular embodiment, there can be more than 100 layers (i.e., hot layers and cold layers). In referring to heat exchanger core 10 shown in FIG. 1, height will refer to a dimension in the vertical direction as shown in FIG. 1, and width will refer to a dimension in an orthogonal direction along an appropriate axis that is defined by either hot flow or cold flow. In referring to the width of a particular hot or cold layer, reference can also be made to length, for example, when describing the length of the associated closure bars. Of course, after assembly into a heat exchanger (not shown), heat exchanger core 10 can have any physical orientation without regard to the labels of height, width, and/or length as are used herein.

As noted earlier, heat exchanger core 10 can operate at elevated temperatures such as those in modern aircraft engines, where a typical application can be to provide cooling of superheated gas. When heat exchanger core 10 is not being used to exchange heat (i.e., the associated heat exchanger is idle), heat exchanger core 10 components are at an initial temperature (T_{Init}) which can often be much cooler than the operating temperature. The initial temperature (T_{Init}) can also be referred to as a local ambient temperature, or as an idle temperature that is representative of the temperature of heat exchanger core 10 when not in operation. Accordingly, the initial temperature (T_{Init}) can vary depending on the local environmental conditions. During a system start-up, when heat exchanger core 10 (and accordingly, the associated heat exchanger) is put into operation, cold flow is initiated through the cold layers and hot flow is initiated through the hot layers. Accordingly, cold inlet closure bars 20 can be subjected to a rapid heat-up as the hot fluid having hot fluid temperature (T_{H}) flows over (i.e., flows past, flows around) cold inlet closure bars 20 into hot fins 16. The advantage of the present disclosure can be described by contrasting the start-up transient of heat exchanger core 10 to that of a plate-fin heat exchanger of the prior art (not shown), in which a hot flow is directed at the cold inlet closure bars, thereby quickly raising their temperature from ambient temperature to a steady-state operating temperature. This heat-up transient can result in transient stress-loading in heat exchanger core 10 particularly in and near cold inlet closure bars 20, which can affect the service life and/or the maintenance requirements. As will be described in regard to the figures that follow, heat exchanger core 10 of the present disclosure provides temperature increase rate control during the start-up transient which can lower the cyclic stress loading on heat exchanger core 10, thereby reducing maintenance requirements and/or extending the service life.

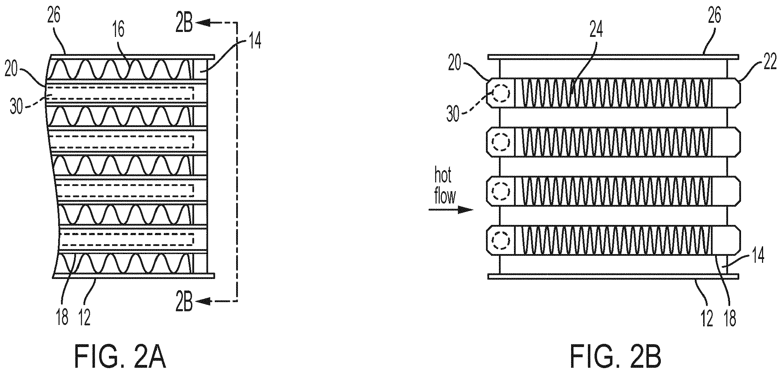

FIG. 2A is an end view of the plate-fin heat exchanger core of FIG. 1 in which hot fins 16 are visible. FIG. 2B is a side view of the plate-fin heat exchanger core of FIG. 1 in which cold fins 24 are visible. Shown in FIGS. 2A - 2B are bottom end sheet 12, hot closure bars 14, hot fins 16, parting sheets 18, cold inlet closure bars 20, cold outlet closure bars 22, cold fins 24, and top end sheet 26, having descriptions substantially similar to those provided above in regard to FIG. 1. Also shown in FIG. 1 are rate-control cores 30, shown in phantom, which are located within cold inlet closure bars 20. As described above in regard to FIG. 1, cold inlet closure bars 20 (i.e., near the hot fluid inlet) are subject to an extreme temperature transient within heat exchanger core 10. Therefore, rate-control cores 30 are used to mitigate the temperature transient that cold inlet closure bars 20 experience, prolonging the heat-up transient and thereby reducing the cyclic stress loading. As used in this disclosure, rate-control core 30 can also be referred to as a temperature rate-control core.

In the illustrated embodiment, rate-control cores 30 are located within cold inlet closure bars 20, which are exposed to the hot fluid temperature (T_{H}) during the heat-up transient. In some embodiments, some or all cold outlet closure bars 22 can also include a rate-control core 30. In these and/or other embodiments, some (i.e., at least one) cold inlet closure bars 20 can include rate-control cores 30. Cold inlet closure bars 20, which include rate-control cores 30, can also be referred to as temperature rate-control closure bars, or simply, as rate-control closure bars. Accordingly, as used in the present disclosure, cold inlet closure bars 20 and temperature rate-control closure bars 20 can be used interchangeably. In the illustrated embodiment, heat exchanger core 10 and its components (including temperature rate-control closure bars 20) can be assembled and metallurgically joined using one of several exemplary processes including brazing and welding (e.g., electron beam welding). In some embodiments, heat exchanger core 10 and its components can be manufactured by additive manufacturing, hybrid additive subtractive manufacturing, subtractive manufacturing, and/or casting, for example. Embodiments of features described herein can leverage any additive or partial-additive manufacturing method is within the scope of the present disclosure.

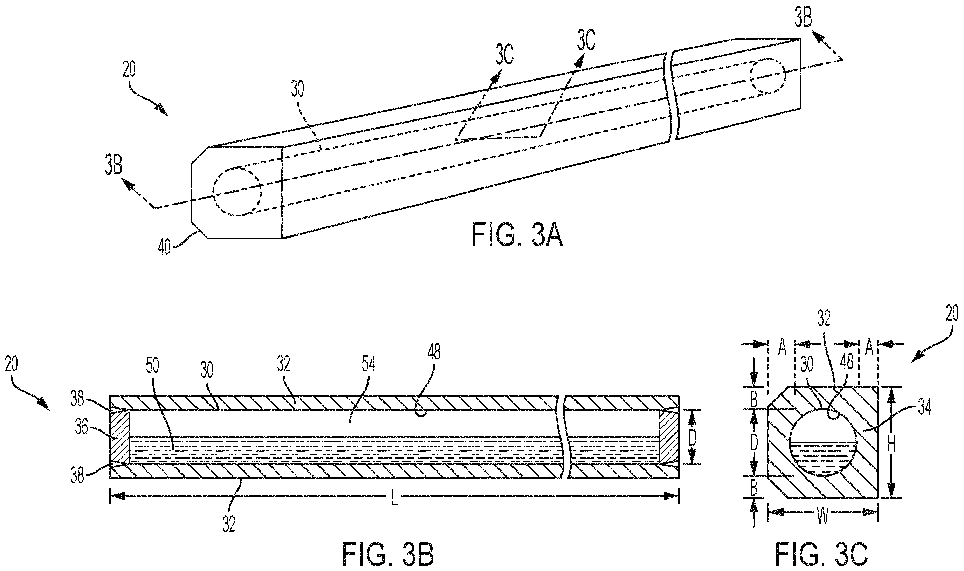

FIG. 3A is a perspective view of temperature rate-control closure bar 20 shown in FIG. 2B. FIG. 3B is a cross-sectional side view of temperature rate-control closure bar 20. FIG. 3C is a cross-sectional end view of temperature rate-control closure bar 20. Shown in FIGS. 3A - 3C are temperature rate-control closure bar 20, rate-control core 30, upper/lower wall 32, sidewall 34, end plug 36, weld 38, chamfer 40, phase-changing material 50, and void space 54. Also labeled in FIGS. 3B - 3C are bar length L, bar height H, bar width W, core diameter D, sidewall thickness A, and upper/lower wall thickness B. In the illustrated embodiment, temperature rate-control closure bar 20 is first fabricated having void space 54 on the interior, and then later filled or partially-filled with phase-changing material 50 by affixing end plug 36 at each end. Temperature rate-control closure bar 20 is made of metal or a metal alloy, with non-limiting examples of metallic materials including nickel, aluminum, titanium, copper, iron, cobalt, and/or all alloys that include these various metals. In an exemplary embodiment, temperature rate-control closure bar 20 can be a corrosion-resistant steel (i.e., CRES, stainless steel). Temperature rate-control closure bar 20 can be made by extrusion. In some embodiments, temperature rate-control closure bar 20 can be formed by additive manufacturing, hybrid additive subtractive manufacturing, subtractive manufacturing, casting, and/or forging, for example. In other embodiments that utilize additive manufacturing processes, temperature rate-control closure bar 20 can be made from any of the previously listed metals and/or their alloys. In some of these other embodiments, various alloys of INCONEL^{™} can be used, with Inconel 625 and Inconel 718 being two exemplary alloy formulations. In other embodiments, HAYNES^{™} 282 can be used. In the illustrated embodiment, chamfer 40 is located on each of the outward-facing corners (i.e., the corners that are incident to the hot flow entering heat exchanger core 10). Chamfers 40 can help reduce stress in temperature rate-control closure bar 20. In some embodiments, chamfers 40 can also assist in the aerodynamic/hydrodynamic properties of heat exchanger core 10 (e.g., flow channeling, flow smoothing). In other embodiments, one or both chamfers 40 can be omitted from temperature rate-control closure bars 20.

Referring to FIGS. 3B - 3C, temperature rate-control closure bar 20 has bar length L, bar height H, and bar width W. In the illustrated embodiment, bar length L is about 12 cm (5 inches), bar height H is about 4 mm (0.16 in), bar width W is about 4.5 mm (0.18 inch), core diameter D is about 2 mm (0.08 in), sidewall thickness A is about 1.25 mm (0.05 inch), and upper/lower wall thickness B is about 1 mm (0.04 inch). In some embodiments, bar length L can range from about 5 cm (2 inches) to about 1.8 m (6 feet). In other embodiments, bar height H can range from about 0.64 mm (0.025 inch) to about 25 mm (1 inch). It is to be appreciated that in an exemplary embodiment, the dimensions of bar height H, bar width W, core diameter D, sidewall thickness A, and upper/lower wall thickness B can roughly scale with each other, thereby maintaining a cross-sectional aspect that is roughly similar to that depicted in FIG. 3C, however these dimensions can vary widely while keeping within the scope of the present embodiment. In the illustrated embodiment, the cross-sectional shape of rate-control core 30 is circular (i.e., having core diameter D). In some embodiments, the cross-sectional shape of rate-control core 30 can be elliptical, oval, oblong, or polygonal. As used in the present disclosure, rate-control core 30 refers to the hollow internal region of temperature rate-control closure bar 20 and any included fill material (i.e., phase-changing material 50 in solid, liquid, and/or gaseous phase, and any remaining void space). The hollow internal region can also be referred to as a center void region.

Referring again to FIGS. 3B - 3C, temperature rate-control closure bar 20 contains phase-changing material 50 which fills a portion of rate-control core 30. In the illustrated embodiment, phase-changing material 50 is a liquid at ambient temperature and void space 54 occupies the remainder of the volume of rate-control core 30. Void space 54 can also be referred to as a residual void volume. In the illustrated embodiment, void space 54 is filled with air. In some embodiments, void space 54 can be filled with an inert gas, with helium, nitrogen, and argon being non-limiting examples. In other embodiments, void space 54 can be evacuated, thereby containing a vacuum. In some of these other embodiments, a partial vacuum (i.e., rarefied air and/or gas) can exist. End plug 36 hermetically seals each end of temperature rate-control closure bar 20, thereby containing phase-changing material 50. End plug 36 can have a thickness (not labeled) that is on the order of magnitude of sidewall thickness A. In the illustrated embodiment, welds 38 metallurgically join end plugs 36 to temperature rate-control closure bar 20. In some embodiments, the metallurgically joining can be by brazing. In other embodiments, end plugs 36 can be joined to temperature rate-control closure bar 20 by interference fit or by the use of a threaded fastener (e.g., cap screw). In the illustrated embodiment, wall coating 48 coats the interior of temperature rate-control closure bar 20 (i.e., the interior surfaces of upper/lower walls 32, sidewalls 34, and end plugs 36). Wall coating 48 is a material that reduces or prevents the reaction of phase-changing material 50 with the material of temperature rate-control closure bars 20. In an exemplary embodiment, wall coating 48 is high-temperature paint. In other embodiments, wall coating can be a polymer coating, ceramic coating, or a plating. In some of these other embodiments, wall coating can be metallic plating. An exemplary metallic plating is electroless nickel. In some embodiments, wall coating 48 can be omitted from some or all surfaces of rate-control core 30 (i.e., interior surfaces of temperature rate-control closure bar 20).

In the illustrated embodiment, phase-changing material 50 occupies approximately 30% of the volume of rate-control core 30 at ambient temperature (T_{Amb}). This can also be referred to as a fill volume ratio. In some embodiments, phase-changing material 50 can occupy between 25 - 35% of the volume of rate-control core 30 at ambient temperature (T_{Amb}). In other embodiments, phase-changing material 50 can occupy between 20 - 95% of the volume of rate-control core 30 at ambient temperature (T_{Amb}). It is to be appreciated that as phase-changing material 50 boils, void space 54 begins to fill with a vapor of phase-changing material 50. As used in this disclosure, ambient temperature (T_{Amb}) is taken to be 20 deg. C (68 deg. F), unless otherwise specified.

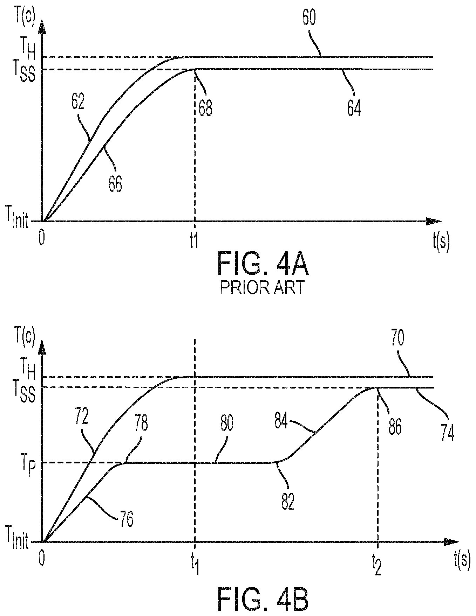

FIG. 4A is a graph of temperature versus time for a closure bar of the prior art, obtained from mathematical modeling. Shown in FIG. 4A are hot fluid temperature plot 60, hot fluid heat-up region 62, cold closure bar bulk temperature plot 64, cold closure bar heat-up region 66, and cold closure bar steady state point 68. The units of temperature are degrees Celsius (C) with initial temperature (T_{Init}) indicated at the horizontal axis, however specific temperature values are not necessary to the description. The units of time are seconds (s) with zero beginning at the vertical axis, however specific time values are not necessary to the description. As described above in regard to FIG. 1, initial temperature (T_{Init}) is the temperature of heat exchanger core 10 in an idle condition, which can be influenced by the local environmental condition. In the illustrated embodiment, initial temperature (T_{Init}) is about 50 deg. F (10 deg. C), which can be exemplary of the local environmental condition for an aircraft that is idle on the ground. At time zero (i.e., t = 0), hot fluid is directed at the heat exchanger core of the prior art and the hot fluid temperature begins to rise during hot fluid heat-up region 62. Eventually, hot fluid temperature achieves the steady-state value of hot fluid temperature (T_{H}). As the hot fluid flows past the cold inlet closure bars of the prior art, cold closure bar bulk temperature begins to rise in response to the incoming hot fluid flow, during cold closure bar heat-up region 66. Eventually, cold closure bar bulk temperature achieves cold closure bar bulk steady state temperature (T_{SS}) at cold closure bar steady state point 68 corresponding to the time to steady state (t₁). Accordingly, the stress loading on the cold inlet closure bars is a result of the temperature excursion from initial temperature (T_{Init}) to cold closure bar bulk steady state temperature (Tss) over time to steady state (t₁). It is to be appreciated that during steady state, cold closure bar bulk steady state temperature (T_{SS}) is less than hot fluid temperature (T_{H}) as a result of the heat flux across the cold inlet closure bar.

FIG. 4B is a graph of temperature versus time for temperature rate-control closure bar 20, obtained from mathematical modeling. The advantages of temperature rate-control closure bar 20 of the present disclosure are described in contrast to FIG. 4A showing the closure bar of the prior art, while using a common time scale. Shown in FIG. 4B are hot fluid temperature plot 70, hot fluid heat-up region 72, cold closure bar bulk temperature plot 74, cold closure bar first heat-up region 76, phase change begin point 78, phase change region 80, phase change end point 82, cold closure bar second heat-up region 84, and cold closure bar steady state point 86. As noted above in regard to FIG. 4A, the units of temperature are degrees Celsius (C), with initial temperature (Tint) indicated at the horizontal axis, however specific temperature values are not necessary to the description. Similarly, the units of time are seconds (s), with zero beginning at the vertical axis, however specific time values are not necessary to the description. As described above in regard to FIG. 1, initial temperature (T_{Init}) is the temperature of heat exchanger core 10 in an idle condition. In the illustrated embodiment, initial temperature (T_{Init}) is about 50 deg. F (10 deg. C). Accordingly, At time zero (i.e., t = 0), hot fluid is directed at heat exchanger core 10 and the entering hot fluid temperature begins to rise during hot fluid heat-up region 72. Eventually, hot fluid temperature achieves the steady-state value of hot fluid temperature (T_{H}). As the hot fluid flows past cold inlet closure bars 20, cold closure bar bulk temperature begins to rise in response to the incoming hot fluid flow, during cold closure bar first heat-up region 76. Eventually, phase-changing material 50 begins to boil at phase change begin point 78. Phase-changing material 50 absorbs heat energy through the latent heat of vaporization (LHV), while maintaining essentially a steady temperature during phase change region 80. Eventually, phase-changing material 50 has been converted into vapor (i.e., all available LHV has been absorbed) at phase change end point 82, and cold closure bar bulk temperature begins to rise again. Eventually, cold closure bar bulk temperature achieves cold closure bar bulk steady state temperature (T_{SS}) at cold closure bar steady state point 86, corresponding to phase-changing time to steady state (t₂). As can be seen from FIGS. 4A - 4B, the phase-changing time to steady state (t₂) is greater than the time to steady state (t₁) for a heat exchanger core of the prior art, thereby prolonging the heat-up of cold inlet closure bars 20. Accordingly, the stress loading on temperature rate-control closure bars 20 is less than that of the prior art because the temperature excursion from initial temperature (T_{Init}) to cold closure bar bulk steady state temperature (T_{SS}) occurs over a much longer phase-changing time to steady state (t₂). Stated alternatively, the aggregate heat-up rate (i.e., the change in temperature divided by the change in time) is lower. It is to be appreciated that during steady state, the cold closure bar bulk steady state temperature (T_{SS}) is less than the hot fluid temperature (T_{H}) as a result of the heat flux across temperature rate-control closure bars 20.

In the illustrated embodiment, phase-changing time to steady state (t₂) is about 2.5 times the value of time to steady state (t₁) in the prior art. The ratio of t₂ to t₁ can be referred to as the heat-up prolongation factor. In some embodiments, the heat-up prolongation factor can range from about 1.5 - 10. In other embodiments, the heat-up prolongation factor can be greater than 10. It is to be appreciated that several factors can affect the heat-up prolongation factor in a particular embodiment, with non-limiting examples including the hot fluid temperature (T_{H}), the physical size of temperature rate-control closure bars 20, the volume of rate control core 30, the specific heat capacity and thermal conductivity of temperature rate-control closure bars 20, the material used for phase-changing material 50, and the fill volume percentage.

In some embodiments, phase-changing material 50 is a solid at ambient temperature, with the phase-change temperature representing a melting point. Accordingly, phase-changing material 50 is selected to have a melting temperature that occurs during the temperature transient when hot flow is initiated into heat exchanger core 10 (i.e., during the heat-up phase). In these embodiments, phase-changing material 50 absorbs heat energy through the latent heat of fusion (LHF), while maintaining essentially a steady temperature during phase change region 80, with non-limiting examples including includes sodium, potassium, cesium, lithium, and their salts. In these embodiments, phase-changing material 50 can be inserted within temperature rate-control closure bars 20 during the manufacturing process in any form including a solid rod, pellets, and/or a powder. Moreover, in the invention the fill volume ratio can be about 90%, thereby allowing a small void space 54 to accommodate the thermal expansion of phase-changing material 50 within temperature rate-control closure bar 20. In other embodiments, phase-changing material 50 can undergo both melting and boiling during the heat-up of temperature rate-control closure bars 20, thereby resulting in two regions of steady temperature (i.e., two temperature plateaus) in cold closure bar bulk temperature plot 74.

It is to be appreciated that for most materials, phase-changing is a reversible process in which the heat energy (i.e., LHV) that is absorbed during vaporization (i.e., changing phase from liquid to gaseous) is later liberated during condensation (i.e., changing phase from gaseous to liquid). Similarly, the heat energy (i.e., LHF) that is absorbed during melting (i.e., changing phase from solid to liquid) is later liberated during freezing (i.e., changing phase from liquid to solid). Accordingly, the present disclosure also provides temperature decrease rate control by lengthening the period of time it takes for temperature rate-control closure bars 20 to cool down from an operating temperature to a final temperature. Phase-changing material 50 can therefore said to have a forward and a reverse phase-changing direction. In a particular embodiment, the forward-reverse phase-changing direction pair can be boiling-condensing. In another particular embodiment, the forward-reverse phase-changing direction pair can be melting-solidifying. In some embodiments, phase-changing material 50 can have two phase-changing temperatures (i.e., melting and boiling) that occur between the initial temperature (T_{Init}) and the hot fluid temperature (T_{H}).

Moreover, it is to be appreciated that initial temperature (T_{Init}) can vary widely under various embodiments. In an exemplary embodiment where heat exchanger core 10 is on an aircraft that is parked on the ground, initial temperature (T_{Init}) can range from about -70 deg F to 140 deg. F (-57 deg C to 60 deg C). In another embodiment, for example, where heat exchanger core 10 is exposed to cold circuit fan air prior to initiating hot air flow by the opening of a shutoff valve, initial temperature (T_{Init}) can be about 300 deg. F (149 deg. C). In yet other embodiments, initial temperature (T_{Init}) can be an elevated temperature (e.g., an operating temperature), whereby temperature rate-control closure bars 20 provide cool-down rate control. Accordingly, initial temperature (T_{Init}) ranging from near absolute zero (for example, in cryogenic distillation) to 1,300 deg. F (704 deg. C) or more are within the scope of the present disclosure. Therefore, the selection of phase-changing material 50 can be influenced by the expected range of temperatures that can be encountered in any particular embodiment.

In the embodiment shown in FIGS. 2A - 2B and 3A - 3C, phase-changing material 50 was used in cold inlet closure bar 20 of heat exchanger core 10, depicted as being a plate-fin heat exchanger core. All bars having rate-control core 30 that includes phase-changing material 50 for use in a heat exchanger core are within the scope of the present disclosure, whereby their use can include slowing the rate of temperature increase by absorbing latent heat as the phase-changing material changes phase in the forward direction (e.g., melting or boiling), and/or slowing the rate of temperature decrease by liberating the latent heat as the phase-changing material changes phase in the reverse direction (e.g., solidifying or condensing).

While the invention has been described with reference to an exemplary embodiment(s), it will be understood by those skilled in the art that various changes may be made and equivalents may be substituted for elements thereof without departing from the scope of the invention as defined by

## Claims

1. A closure bar (20) adapted for use in a heat exchanger core, the closure bar comprising a center void region (30) configured to be partially filled with a phase-changing material (50) and sealed, thereby containing the phase-changing material, and
**characterized in that**
said center void region has an elliptical, oval, oblong or polygonal cross-section, and **in that**:
the center void region (30) defines a center void region volume;
the phase-changing material (50) fills about 90% of the center void region volume at an ambient temperature, thereby defining a residual void volume; and
wherein the phase-changing material (50) is selected from the group consisting of: sodium, potassium, cesium, lithium, and salts thereof.

2. The closure bar of claim 1, wherein the residual void volume contains a vacuum, or wherein the residual void volume is filled with a gas that includes argon, helium, nitrogen, air, or mixtures thereof.

3. The closure bar of claim 1 wherein the closure bar is suitable for being positioned in a flow of a hot fluid, wherein:
the closure bar (20) is configured to be subjected to a flow of said hot fluid having a hot fluid operating temperature;
the phase-changing material (50) has a melting point that is between an initial temperature and the hot fluid operating temperature; and
the phase-changing material (50) is configured to:
melt as the flow of hot fluid over the closure bar begins, thereby slowing a rate of temperature increase by absorbing a latent heat of fusion as the phase-changing material melts; and
solidify as the flow of hot fluid over the closure bar ceases, thereby slowing a rate of temperature decrease by liberating the latent heat of fusion as the phase-changing material solidifies.

4. The heat exchanger core of claim 3,
wherein:
the phase-changing material (50) additionally has a boiling point that is between the melting point and the hot fluid operating temperature; and
the phase-changing material (50) is configured to:
boil as the flow of hot fluid over the closure bar continues, thereby further slowing the rate of temperature increase by absorbing a latent heat of vaporization as the phase-changing material boils; and
condense as the flow of hot fluid over the closure bar ceases, thereby further slowing the rate of temperature decrease by liberating the latent heat of vaporization as the phase-changing material condenses.

5. The closure bar of any preceding claim, comprising one or more materials selected from the group consisting of nickel, aluminum, titanium, copper, iron, cobalt, and alloys thereof.

6. The closure bar of any preceding claim, wherein each center void region is configured to be sealed by a method selected from the group consisting of: brazing, welding, sealing with an interference-fitted plug, and sealing with a threaded fitting.

7. The closure bar of any preceding claim
wherein:
the center void region defines an interior surface; and
the interior surface is coated with a material that is configured to prevent the phase-changing material from reacting with the first cold closure bars.

8. A heat exchanger core (10) comprising:
a bottom end sheet (12);
a plurality of alternately stacked individual hot and cold layers, the cold layers defining a hot layer inlet region and a hot layer outlet region; and
a top end sheet (26);
wherein:
each individual hot layer includes:
a hot fin element forming a plurality of parallel open-ended hot channels adapted to pass a fluid therethrough;
a parting sheet (18) separating each individual hot layer from the adjacent individual cold layer; and
two hot closure bars positioned on opposite sides of the fin element, parallel to the open-ended hot channels and extending the length of the open-ended hot channels;
each individual cold layer includes:
a cold fin element forming a plurality of parallel open-ended cold channels adapted to pass a fluid therethrough;
a parting sheet separating each individual cold layer from the adjacent individual hot layer;
a first cold closure bar, positioned on a first side of the cold fin element proximate the hot layer inlet region, parallel to the open-ended cold channels and extending the length of the open-ended cold channels; and
a second cold closure bar, positioned on a second side of the cold fin element proximate to the hot layer outlet region and opposite the first cold closure bar, parallel to the open-ended cold channels and extending the length of the open-ended cold channels;
wherein the second cold closure bar is the closure bar of any preceding claim.

9. The heat exchanger core of claim 8, wherein:
each individual hot layer comprises two hot closure bars, each defining a hot closure height between 0.64 - 25 mm (0.025 - 1 inch); and
each individual cold layer comprises two cold closure bars, each defining a cold closure height between 0.64 - 25 mm (0.025 - 1 inch).

10. The heat exchanger of claim 8,wherein the heat exchanger core is manufactured by one or more processes selected from the group consisting of: additive manufacturing, hybrid additive manufacturing, subtractive manufacturing, and hybrid additive subtractive manufacturing.

11. A method of producing a closure bar, the method comprising:
forming the closure bar (20) of any preceding claim, the closure bar defining the center void region (30);
filling about 90% of a volume of the center void region at ambient temperature with the phase-changing material (50) selected from the group consisting of: sodium,potassium, cesium, lithium, and salts thereof; and
sealing the closure bar, thereby containing the phase-changing material within the center void region.

12. The method of claim 11, wherein:
the center void region is configured to be sealed by a method selected from the group consisting of: brazing, welding, sealing with an interference-fitted plug, and sealing with a threaded fitting; and
the closure bar comprises one or more materials selected from the group consisting of nickel, aluminum, titanium, copper, iron, cobalt, and alloys thereof.

13. The method of claim 11 or 12
wherein:
the closure bar is configured to be subjected to a flow of a hot fluid having a hot fluid operating temperature;
the phase-changing material has at least one phase-changing point that is between an initial temperature and the hot fluid operating temperature;
wherein the at least one phase-changing point is selected from the group consisting of: melting and boiling;
the phase-changing material is configured to:
change phase in a forward direction as the flow of hot fluid over the closure bar begins, thereby slowing a rate of temperature increase by absorbing a latent heat as the phase-changing material changes phase in the forward direction; and
change phase in a reverse direction as the flow of hot fluid over the closure bar ceases, thereby slowing a rate of temperature decrease by liberating the latent heat as the phase-changing material changes phase in the reverse direction;
wherein the forward-reverse directions are selected from the group consisting of: boiling-condensing and melting-solidifying.

14. A method of operating a heat exchanger core (10) to reduce a rate of change of temperature in at least one portion thereof, wherein the heat exchanger core includes a closure bar (20) having a center void region (30) with an elliptical, oval, oblong, or polygonal cross-section about 90% filled with a phase-changing material at ambient temperature and sealed, the phase-changing material is selected from the group consisting of: sodium, potassium, cesium, lithium, and salts thereof, the phase-changing material has at least one phase-changing point that is between an initial temperature and a hot fluid operating temperature, and the closure bar (20) is disposed in a region of the heat exchanger core (10) that is configured to receive a hot fluid having a hot fluid operating temperature, the method comprising:
initiating a flow of the hot fluid to the heat exchanger core;
slowing a rate of temperature increase by absorbing a latent heat as the phase-changing material changes phase in a forward direction;
ceasing the flow of the hot fluid to the heat exchanger core; and
slowing a rate of temperature decrease by liberating a latent heat as the phase-changing material changes phase in a reverse direction;
wherein:
the phase-changing material has at least one phase-changing point that is between an initial temperature and the hot fluid operating temperature;
wherein the at least one phase-changing point is selected from the group consisting of: melting and boiling;
the phase-changing material is configured to:
change phase in the forward direction as the flow of hot fluid over the closure bar begins, thereby slowing a rate of temperature increase by absorbing a latent heat as the phase-changing material changes phase in the forward direction; and
change phase in the reverse direction as the flow of hot fluid over the closure bar ceases, thereby slowing a rate of temperature decrease by liberating the latent heat as the phase-changing material changes phase in the reverse direction; and
the forward-reverse directions are selected from the group consisting of: boiling-condensing and melting-solidifying and **characterized in that** said center void region has an elliptical, oval, oblong, or polygonal cross-section, and **characterized in that**:
the center void region (30) defines a center void region volume;
the center void region is filled with the phase-changing material; and
the phase-changing material (50) fills between 20 - 95% of the center void region volume at an ambient temperature, thereby defining a residual void volume.

15. The method of claim 14, wherein:
the center void region (30) is configured to be sealed by a method selected from the group consisting of: brazing, welding, sealing with an interference-fitted plug, and sealing with a threaded fitting; and
the closure bar (20) comprises one or more materials selected from the group consisting of nickel, aluminum, titanium, copper, iron, cobalt, and alloys thereof.

## Patentansprüche

1. Verschlussleiste (20), die zur Verwendung in einem Wärmetauscherkern ausgelegt ist, wobei die Verschlussleiste einen zentralen Hohlraumbereich (30) umfasst, der dazu konfiguriert ist, teilweise mit einem phasenveränderlichen Material (50) gefüllt und abgedichtet zu sein, wodurch das phasenveränderliche Material enthalten ist, und
**dadurch gekennzeichnet, dass**
der zentrale Hohlraumbereich einen elliptischen, ovalen, länglichen oder vieleckigen Querschnitt aufweist, und dass:
der zentrale Hohlraumbereich (30) ein Volumen des zentralen Hohlraumbereichs definiert;
das phasenveränderliche Material (50) bei Umgebungstemperatur etwa 90 % des Volumens des zentralen Hohlraumbereichs ausfüllt, wodurch ein verbleibendes Hohlraumvolumen definiert wird; und
wobei das phasenveränderliche Material (50) ausgewählt ist aus der Gruppe bestehend aus: Natrium, Kalium, Cäsium, Lithium und Salzen davon.

2. Verschlussleiste nach Anspruch 1, wobei das verbleibende Hohlraumvolumen ein Vakuum enthält oder wobei das verbleibende Hohlraumvolumen mit einem Gas gefüllt ist, das Argon, Helium, Stickstoff, Luft oder Mischungen davon beinhaltet.

3. Verschlussleiste nach Anspruch 1, wobei die Verschlussleiste geeignet ist, um in einer Strömung eines heißen Fluids positioniert zu werden, wobei:
die Verschlussleiste (20) dazu konfiguriert ist, einer Strömung des heißen Fluids, die eine Betriebstemperatur des heißen Fluids aufweist, ausgesetzt zu sein;
das phasenveränderliche Material (50) einen Schmelzpunkt aufweist, der zwischen einer Anfangstemperatur und der Betriebstemperatur des heißen Fluids liegt; und
das phasenveränderliche Material (50) zu Folgendem konfiguriert ist:
Schmelzen, wenn die Strömung des heißen Fluids über die Verschlussleiste beginnt, wodurch eine Rate eines Temperaturanstiegs verlangsamt wird, indem eine latente Fusionswärme absorbiert wird, wenn das phasenveränderliche Material schmilzt; und
Erstarren, wenn die Strömung des heißen Fluids über die Verschlussleiste aufhört, wodurch eine Rate einer Temperaturverringerung verlangsamt wird, indem die latente Fusionswärme freigesetzt wird, wenn das phasenveränderliche Material erstarrt.

4. Wärmetauscherkern nach Anspruch 3,
wobei:
das phasenveränderliche Material (50) zusätzlich einen Siedepunkt aufweist, der zwischen dem Schmelzpunkt und der Betriebstemperatur des heißen Fluids liegt; und
das phasenveränderliche Material (50) zu Folgendem konfiguriert ist:
Sieden, wenn die Strömung des heißen Fluids über die Verschlussleiste anhält, wodurch die Rate des Temperaturanstiegs weiter verlangsamt wird, indem eine latente Verdampfungswärme absorbiert wird, wenn das phasenveränderliche Material siedet; und
Kondensieren, wenn die Strömung des heißen Fluids über die Verschlussleiste aufhört, wodurch die Rate der Temperaturverringerung weiter verlangsamt wird, indem die latente Verdampfungswärme freigesetzt wird, wenn das phasenveränderliche Material kondensiert.

5. Verschlussleiste nach einem der vorhergehenden Ansprüche, umfassend ein oder mehrere Materialien, ausgewählt aus der Gruppe bestehend aus Nickel, Aluminium, Titan, Kupfer, Eisen, Kobalt und Legierungen davon.

6. Verschlussleiste nach einem der vorhergehenden Ansprüche, wobei jeder zentrale Hohlraumbereich dazu konfiguriert ist, durch ein Verfahren abgedichtet zu werden, ausgewählt aus der Gruppe bestehend aus: Hartlöten, Schweißen, Abdichten mit einem Presspassstopfen und Abdichten mit einem Gewindeanschluss.

7. Verschlussleiste nach einem der vorhergehenden Ansprüche wobei:
der zentrale Hohlraumbereich eine Innenfläche definiert; und
die Innenfläche mit einem Material beschichtet ist, das dazu konfiguriert ist, zu verhindern, dass das phasenveränderliche Material mit den ersten kalten Verschlussleisten reagiert.

8. Wärmetauscherkern (10), umfassend:
ein unteres Endblech (12);
eine Vielzahl abwechselnd gestapelter einzelner heißer und
kalter Schichten, wobei die kalten Schichten einen Einlassbereich für die heiße Schicht und einen Auslassbereich für die heiße Schicht definieren; und
ein oberes Endblech (26);
wobei:
jede einzelne heiße Schicht Folgendes beinhaltet:
ein heißes Rippenelement, das eine Vielzahl paralleler heißer Kanäle mit offenem Ende bildet, die ausgelegt ist, um ein Fluid hindurchzuleiten;
ein Trennblech (18), das jede einzelne heiße Schicht von der benachbarten einzelnen kalten Schicht trennt; und
zwei heiße Verschlussleisten, die auf gegenüberliegenden Seiten des Rippenelements parallel zu den heißen Kanälen mit offenem Ende positioniert sind und sich über die Länge der heißen Kanäle mit offenem Ende erstrecken;
jede einzelne kalte Schicht Folgendes beinhaltet:
ein kaltes Rippenelement, das eine Vielzahl paralleler kalter Kanäle mit offenem Ende bildet, die ausgelegt ist, um ein Fluid hindurchzuleiten;
ein Trennblech, das jede einzelne kalte Schicht von der benachbarten einzelnen kalten Schicht trennt;
eine erste kalte Verschlussleiste, die auf einer ersten Seite des kalten Rippenelements in der Nähe des Einlassbereichs für die heiße Schicht parallel zu den kalten Kanälen mit offenem Ende positioniert ist und sich über die Länge der kalten Kanäle mit offenem Ende erstreckt; und
eine zweite kalte Verschlussleiste, die auf einer zweiten Seite des kalten Rippenelements in der Nähe des Auslassbereichs für die heiße Schicht und gegenüber der ersten kalten Verschlussleiste parallel zu den kalten Kanälen mit offenem Ende positioniert ist und sich über die Länge der kalten Kanäle mit offenem Ende erstreckt; und
wobei die zweite kalte Verschlussleiste die Verschlussleiste nach einem der vorhergehenden Ansprüche ist.

9. Wärmetauscherkern nach Anspruch 8, wobei:
jede einzelne heiße Schicht zwei heiße Verschlussleisten umfasst, wobei jede eine Höhe des heißen Verschlusses zwischen 0,64 und 25 mm (0,025 und 1 Zoll) definiert; und
jede einzelne kalte Schicht zwei kalte Verschlussleisten umfasst, wobei jede eine Höhe des kalten Verschlusses zwischen 0,64 und 25 mm (0,025 und 1 Zoll) definiert.

10. Wärmetauscher nach Anspruch 8, wobei der Wärmetauscherkern durch einen oder mehrere Prozesse hergestellt wird, ausgewählt aus der Gruppe bestehend aus: additiver Fertigung, hybrider additiver Fertigung, subtraktiver Fertigung und hybrider additiv-subtraktiver Fertigung.

11. Verfahren zum Herstellen einer Verschlussleiste, wobei das Verfahren Folgendes umfasst:
Bilden der Verschlussleiste (20) nach einem der vorhergehenden Ansprüche, wobei die Verschlussleiste den zentralen Hohlraumbereich (30) definiert;
Füllen von etwa 90 % des Volumens des zentralen Hohlraumbereichs bei Umgebungstemperatur mit dem phasenveränderlichen Material (50), ausgewählt aus der Gruppe bestehend aus: Natrium, Kalium, Cäsium, Lithium und Salzen davon; und
Abdichten der Verschlussleiste, wodurch das phasenveränderliche Material in dem zentralen Hohlraumbereich gehalten wird.

12. Verfahren nach Anspruch 11, wobei:
der zentrale Hohlraumbereich dazu konfiguriert ist, durch ein Verfahren abgedichtet zu werden, ausgewählt aus der Gruppe bestehend aus: Hartlöten, Schweißen, Abdichten mit einem Presspassstopfen und Abdichten mit einem Gewindeanschluss; und
die Verschlussleiste ein oder mehrere Materialien umfasst, ausgewählt aus der Gruppe bestehend aus Nickel, Aluminium, Titan, Kupfer, Eisen, Kobalt und Legierungen davon.

13. Verfahren nach Anspruch 11 oder 12,
wobei:
die Verschlussleiste dazu konfiguriert ist, einer Strömung eines heißen Fluids, die eine Betriebstemperatur des heißen Fluids aufweist, ausgesetzt zu sein;
das phasenveränderliche Material mindestens einen Phasenänderungspunkt aufweist, der zwischen einer Anfangstemperatur und der Betriebstemperatur des heißen Fluids liegt;
wobei der mindestens eine Phasenänderungspunkt aus der Gruppe bestehend aus: Schmelzen und Sieden ausgewählt ist;
das phasenveränderliche Material zu Folgendem konfiguriert ist:
Ändern der Phase in einer Vorwärtsrichtung, wenn die Strömung des heißen Fluids über die Verschlussleiste beginnt, wodurch eine Rate eines Temperaturanstiegs verlangsamt wird, indem eine latente Wärme absorbiert wird, wenn das phasenveränderliche Material seine Phase in der Vorwärtsrichtung ändert; und
Ändern der Phase in einer Rückwärtsrichtung, wenn die Strömung des heißen Fluids über die Verschlussleiste aufhört, wodurch eine Rate einer Temperaturverringerung verlangsamt wird, indem die latente Wärme freigesetzt wird, wenn das phasenveränderliche Material seine Phase in der Rückwärtsrichtung ändert;
wobei die Vorwärts-Rückwärts-Richtungen aus der Gruppe bestehend aus: Sieden-Kondensieren und Schmelzen-Erstarren ausgewählt sind.

14. Verfahren zum Betreiben eines Wärmetauscherkerns (10), um eine Temperaturänderungsrate in mindestens einem Abschnitt davon zu reduzieren, wobei der Wärmetauscherkern eine Verschlussleiste (20) mit einem zentralen Hohlraumbereich (30) mit einem elliptischen, ovalen, länglichen oder vieleckigen Querschnitt aufweist, der zu etwa 90 % mit einem phasenveränderlichen Material bei Umgebungstemperatur gefüllt und abgedichtet ist, wobei das phasenveränderliche Material aus der Gruppe ausgewählt ist, bestehend aus: Natrium, Kalium, Cäsium, Lithium und Salzen davon, wobei das phasenveränderliche mindestens einen Phasenänderungspunkt aufweist, der zwischen einer Anfangstemperatur und einer Betriebstemperatur des heißen Fluids liegt, und die Verschlussleiste (20) in einem Bereich des Wärmetauscherkerns (10) angeordnet, der dazu konfiguriert ist, ein heißes Fluid mit einer Betriebstemperatur des heißen Fluids aufzunehmen, wobei das Verfahren Folgendes umfasst:
Einleiten einer Strömung des heißen Fluids in den Wärmetauscherkern;
Verlangsamen einer Rate eines Temperaturanstiegs durch Absorbieren einer latenten Wärme, wenn das phasenveränderliche Material seine Phase in einer Vorwärtsrichtung ändert;
Beenden der Strömung des heißen Fluids zu dem Wärmetauscherkern; und
Verlangsamen einer Rate einer Temperaturverringerung durch Freisetzen einer latenten Wärme, wenn das phasenveränderliche Material seine Phase in einer Rückwärtsrichtung ändert;
wobei:
das phasenveränderliche Material mindestens einen Phasenänderungspunkt aufweist, der zwischen einer Anfangstemperatur und der Betriebstemperatur des heißen Fluids liegt;
wobei der mindestens eine Phasenänderungspunkt aus der Gruppe bestehend aus: Schmelzen und Sieden ausgewählt ist;
das phasenveränderliche Material zu Folgendem konfiguriert ist:
Ändern der Phase in der Vorwärtsrichtung, wenn die Strömung des heißen Fluids über die Verschlussleiste beginnt, wodurch eine Rate eines Temperaturanstiegs verlangsamt wird, indem eine latente Wärme absorbiert wird, wenn das phasenveränderliche Material seine Phase in der Vorwärtsrichtung ändert; und
Ändern der Phase in der Rückwärtsrichtung, wenn die Strömung des heißen Fluids über die Verschlussleiste aufhört, wodurch eine Rate einer Temperaturverringerung verlangsamt wird, indem die latente Wärme freigesetzt wird, wenn das phasenveränderliche Material seine Phase in der Rückwärtsrichtung ändert; und
wobei die Vorwärts-Rückwärts-Richtungen aus der Gruppe ausgewählt sind, die aus Sieden-Kondensieren und Schmelzen-Erstarren besteht, und **dadurch gekennzeichnet, dass** der zentrale Hohlraumbereich einen elliptischen, ovalen, länglichen oder vieleckigen Querschnitt aufweist, und **dadurch gekennzeichnet, dass**:
der zentrale Hohlraumbereich (30) ein Volumen des mittleren Hohlraumbereichs definiert;
der zentrale Hohlraumbereich mit dem phasenveränderlichen Material gefüllt; und
das phasenveränderliche Material (50) bei Umgebungstemperatur zwischen 20 und 95 % des Volumens des zentralen Hohlraumbereichs ausfüllt, wodurch ein verbleibendes Hohlraumvolumen definiert wird.

15. Verfahren nach Anspruch 14, wobei:
der zentrale Hohlraumbereich (30) dazu konfiguriert ist, durch ein Verfahren abgedichtet zu werden, ausgewählt aus der Gruppe bestehend aus: Hartlöten, Schweißen, Abdichten mit einem Presspassstopfen und Abdichten mit einem Gewindeanschluss; und
die Verschlussleiste (20) ein oder mehrere Materialien umfasst, ausgewählt aus der Gruppe bestehend aus Nickel, Aluminium, Titan, Kupfer, Eisen, Kobalt und Legierungen davon.

## Revendications

1. Barre de fermeture (20) conçue pour être utilisée dans un noyau d'échangeur de chaleur, la barre de fermeture comprenant une région de vide centrale (30) configurée pour être partiellement remplie d'un matériau à changement de phase (50) et scellée, contenant ainsi le matériau à changement de phase, et
**caractérisée en ce que**
ladite région de vide centrale a une section transversale elliptique, ovale, oblongue ou polygonale, et **en ce que** :
la région de vide centrale (30) définit un volume de la région de vide centrale ;
le matériau à changement de phase (50) remplit environ 90% du volume de la région de vide centrale à une température ambiante, définissant ainsi un volume de vide résiduel ; et
dans laquelle le matériau à changement de phase (50) est choisi dans le groupe constitué du : sodium, potassium, césium, lithium et des sels de ceux-ci.

2. Barre de fermeture selon la revendication 1, dans laquelle le volume de vide résiduel contient un vide, ou dans laquelle le volume de vide résiduel est rempli d'un gaz qui comprend de l'argon, de l'hélium, de l'azote, de l'air ou des mélanges de ceux-ci.

3. Barre de fermeture selon la revendication 1, dans laquelle la barre de fermeture est conçue pour être positionnée dans un écoulement d'un fluide chaud, dans laquelle :
la barre de fermeture (20) est configurée pour être soumise à un écoulement dudit fluide chaud ayant une température de fonctionnement de fluide chaud ;
le matériau à changement de phase (50) a un point de fusion qui se situe entre une température initiale et la température de fonctionnement de fluide chaud ; et
le matériau à changement de phase (50) est configuré pour :
fondre lorsque l'écoulement du fluide chaud sur la barre de fermeture commence, ralentissant ainsi la vitesse d'augmentation de température en absorbant de la chaleur latente de fusion lorsque le matériau à changement de phase fond ; et
se solidifier lorsque l'écoulement de fluide chaud sur la barre de fermeture cesse, ralentissant ainsi la vitesse de diminution de température en libérant de la chaleur latente de fusion lorsque le matériau à changement de phase se solidifie.

4. Noyau d'échangeur de chaleur selon la revendication 3,
dans lequel :
le matériau à changement de phase (50) a en outre un point d'ébullition qui se situe entre le point de fusion et la température de fonctionnement de fluide chaud ; et
le matériau à changement de phase (50) est configuré pour :
bouillir lorsque l'écoulement de fluide chaud sur la barre de fermeture se poursuit, ralentissant ainsi davantage la vitesse d'augmentation de température en absorbant de la chaleur latente de vaporisation lorsque le matériau à changement de phase bout ; et
se condenser lorsque l'écoulement de fluide chaud sur la barre de fermeture cesse, ralentissant ainsi davantage la vitesse de diminution de température en libérant de la chaleur latente de vaporisation lorsque le matériau à changement de phase se condense.

5. Barre de fermeture selon une quelconque revendication précédente, comprenant un ou plusieurs matériaux choisis dans le groupe constitué du nickel, de l'aluminium, du titane, du cuivre, du fer, du cobalt et des alliages de ceux-ci.

6. Barre de fermeture selon une quelconque revendication précédente, dans laquelle chaque région de vide centrale est configurée pour être scellée par un procédé choisi dans le groupe constitué du : brasage, soudage, scellement avec un bouchon ajusté par serrage et scellement avec un raccord fileté.

7. Barre de fermeture selon une quelconque revendication précédente, dans laquelle :
la région de vide centrale définit une surface intérieure ; et
la surface intérieure est revêtue d'un matériau qui est configuré pour empêcher le matériau à changement de phase de réagir avec les premières barres de fermeture froides.

8. Noyau d'échangeur de chaleur (10) comprenant :
une feuille d'extrémité inférieure (12) ;
une pluralité de couches chaudes et froides individuelles empilées en alternance, les couches froides définissant une région d'entrée de couche chaude et une région de sortie de couche chaude ; et
une feuille d'extrémité supérieure (26) ;
dans lequel :
chaque couche chaude individuelle comprend :
un élément à ailettes chaudes formant une pluralité de canaux chauds parallèles à extrémités ouvertes conçus pour y faire passer un fluide ;
une feuille de séparation (18) séparant chaque couche chaude individuelle de la couche froide individuelle adjacente ; et
deux barres de fermeture chaudes positionnées sur des côtés opposés de l'élément à ailettes, parallèles aux canaux chauds à extrémités ouvertes et s'étendant sur la longueur des canaux chauds à extrémités ouvertes ;
chaque couche froide individuelle comprend :
un élément à ailettes froides formant une pluralité de canaux froids parallèles à extrémités ouvertes conçus pour y faire passer un fluide ;
une feuille de séparation séparant chaque couche froide individuelle de la couche chaude individuelle adjacente ;
une première barre de fermeture froide, positionnée sur un premier côté de l'élément à ailettes froides, à proximité de la région d'entrée de couche chaude, parallèle aux canaux froids à extrémités ouvertes et s'étendant sur la longueur des canaux froids à extrémités ouvertes ; et
une seconde barre de fermeture froide, positionnée sur un second côté de l'élément à ailettes froides à proximité de la région de sortie de couche chaude et à l'opposé de la première barre de fermeture froide, parallèle aux canaux froids à extrémités ouvertes et s'étendant sur la longueur des canaux froids à extrémités ouvertes ;
dans lequel la seconde barre de fermeture froide est la barre de fermeture selon une quelconque revendication précédente.

9. Noyau d'échangeur de chaleur selon la revendication 8, dans lequel :
chaque couche chaude individuelle comprend deux barres de fermeture chaudes, chacune définissant une hauteur de fermeture à chaud comprise entre 0,64 et 25 mm (0,025 et 1 pouce) ; et
chaque couche froide individuelle comprend deux barres de fermeture à froid, chacune définissant une hauteur de fermeture à froid comprise entre 0,64 et 25 mm (0,025 à 1 pouce) .

10. Échangeur de chaleur selon la revendication 8, dans lequel le noyau d'échangeur de chaleur est fabriqué par un ou plusieurs processus sélectionnés dans le groupe constitué de :
la fabrication additive, la fabrication additive hybride, la fabrication soustractive et la fabrication soustractive additive hybride.

11. Procédé de production d'une barre de fermeture, le procédé comprenant :
la formation de la barre de fermeture (20) selon une quelconque revendication précédente, la barre de fermeture définissant la région de vide centrale (30) ;
le remplissage environ 90% d'un volume de la région de vide centrale à température ambiante avec le matériau à changement de phase (50) choisi dans le groupe constitué du : sodium, potassium, césium, lithium et des sels de ceux-ci ; et
le scellement de la barre de fermeture, contenant ainsi le matériau à changement de phase dans la région de vide centrale.

12. Procédé selon la revendication 11, dans lequel :
la région de vide centrale est configurée pour être scellée par un procédé choisi dans le groupe constitué du : brasage, soudage, scellement avec un bouchon ajusté par serrage et scellement avec un raccord fileté ; et
la barre de fermeture comprend un ou plusieurs matériaux choisis dans le groupe constitué du nickel, de l'aluminium, du titane, du cuivre, du fer, du cobalt et des alliages de ceux-ci .

13. Procédé selon la revendication 11 ou 12, dans lequel :
la barre de fermeture est configurée pour être soumise à un écoulement d'un fluide chaud ayant une température de fonctionnement de fluide chaud ;
le matériau à changement de phase présente au moins un point de changement de phase qui se situe entre une température initiale et la température de fonctionnement de fluide chaud ;
dans lequel l'au moins un point de changement de phase est choisi dans le groupe constitué de : la fusion et l'ébullition ;
le matériau à changement de phase est configuré pour :
changer de phase dans une direction vers l'avant lorsque l'écoulement de fluide chaud sur la barre de fermeture commence, ralentissant ainsi une vitesse d'augmentation de température en absorbant de la chaleur latente lorsque le matériau à changement de phase change de phase dans la direction vers l'avant ; et
changer de phase dans une direction inverse lorsque l'écoulement de fluide chaud sur la barre de fermeture cesse, ralentissant ainsi la vitesse de diminution de la température en libérant de la chaleur latente lorsque le matériau à changement de phase change de phase dans la direction inverse ; dans lequel les directions avant-arrière sont sélectionnées dans le groupe constitué de : l'ébullition-condensation et la fusion-solidification.

14. Procédé de fonctionnement d'un noyau d'échangeur de chaleur (10) pour réduire une vitesse de changement de température dans au moins une partie de celui-ci, dans lequel le noyau d'échangeur de chaleur comprend une barre de fermeture (20) ayant une région de vide centrale (30) avec une section transversale elliptique, ovale, oblongue ou polygonale remplie à environ 90% d'un matériau à changement de phase à température ambiante et scellé, le matériau à changement de phase est choisi dans le groupe constitué du : sodium, potassium, césium, lithium et des sels de ceux-ci, le matériau à changement de phase présente au moins un point de changement de phase qui se situe entre une température initiale et une température de fonctionnement de fluide chaud, et la barre de fermeture (20) est disposée dans une région du noyau d'échangeur de chaleur (10) qui est configurée pour recevoir un fluide chaud ayant une température de fonctionnement de fluide chaud, le procédé comprenant :
l'initiation d'un écoulement du fluide chaud vers le noyau d'échangeur de chaleur ;
le ralentissement d'une vitesse d'augmentation de température en absorbant de la chaleur latente lorsque le matériau à changement de phase change de phase dans la direction vers l'avant ;
l'arrêt de l'écoulement du fluide chaud vers le noyau d'échangeur de chaleur ; et
le ralentissement d'une vitesse de diminution de température en libérant de la chaleur latente lorsque le matériau à changement de phase change de phase dans une direction inverse ;
dans lequel :
le matériau à changement de phase présente au moins un point de changement de phase qui se situe entre une température initiale et la température de fonctionnement de fluide chaud ;
dans lequel l'au moins un point de changement de phase est choisi dans le groupe constitué de : la fusion et l'ébullition ;
le matériau à changement de phase est configuré pour :
changer de phase dans une direction vers l'avant lorsque l'écoulement de fluide chaud sur la barre de fermeture commence, ralentissant ainsi une vitesse d'augmentation de température en absorbant de la chaleur latente lorsque le matériau à changement de phase change de phase dans la direction vers l'avant ; et
changer de phase dans la direction inverse lorsque l'écoulement de fluide chaud sur la barre de fermeture cesse, ralentissant ainsi la vitesse de diminution de la température en libérant de la chaleur latente lorsque le matériau à changement de phase change de phase dans la direction inverse ; les directions avant-arrière sont sélectionnées dans le groupe constitué de : l'ébullition-condensation et la fusion-solidification et **caractérisé en ce que** ladite région de vide centrale a une section transversale elliptique, ovale, oblongue ou polygonale, et **caractérisé en ce que** :
la région de vide centrale (30) définit un volume de la région de vide centrale ;
la région de vide centrale est remplie du matériau à changement de phase ; et
le matériau à changement de phase (50) remplit entre 20 et 95% du volume de la région de vide centrale à une température ambiante, définissant ainsi un volume de vide résiduel.

15. Procédé selon la revendication 14, dans lequel :
la région de vide centrale (30) est configurée pour être scellée par un procédé choisi dans le groupe constitué du :
brasage, soudage, scellement avec un bouchon ajusté par serrage et scellement avec un raccord fileté ; et
la barre de fermeture (20) comprend un ou plusieurs matériaux choisis dans le groupe constitué du nickel, de l'aluminium, du titane, du cuivre, du fer, du cobalt et des alliages de ceux-ci .
